# EUROPEAN PATENT APPLICATION

(11) **EP 1 475 896 A2**
(43) Date of publication of application: **10.11.2004**
(21) Application number: 04010599.1
(22) Date of filing: 04.05.2004
(51) Int. Cl.: H04B 1/10, H04B 1/12

(54) **Radio reception apparatus and reception filtering method**

(30) Priority: 09.05.2003 JP 2003132145
(71) Applicant: MATSUSHITA ELECTRIC INDUSTRIAL CO., LTD., Kadoma-shi, Osaka 571-8501 (JP)
(72) Inventor: Matsusaka, Hiromi, Katano-shi Osaka 576-0015 (JP)
(74) Representative: Grünecker, Kinkeldey, Stockmair & Schwanhäusser Anwaltssozietät

(57) **Abstract**

A radio reception apparatus and a reception filtering method that effectively cancel interference component from a received signal and improve reception performance. A variable coefficient digital filter 110 changes tap coefficients for optimal filter characteristics and cancels inter-symbol interference. Additionally, the variable coefficient digital filter 110 uses tap coefficients determined by a tap coefficient control section 1124. A filter adjusting section 112 determines the tap coefficients of the variable coefficient digital filter 110 according to the modulation scheme used in the received signal. More specifically, a modulation scheme determining section 1122 estimates the modulation scheme using the known signal patterns included in the received signal, and outputs a modulation scheme selection signal that represents the estimated modulation scheme. Then, a tap coefficient control section 1124 determines optimal tap coefficients for the estimated modulation scheme according to the modulation scheme selection signal output from the modulation scheme determining section 1122.

## Description

### BACKGROUND OF THE INVENTION

### Field of the Invention

The present invention relates to a radio reception apparatus and a reception filtering method.

### Description of the Related Art

In general, a received signal in a radio reception apparatus includes interference components such as interference from adjacent channels that are different from the desired channel (hereinafter "adjacent channel interference") and inter-symbol interference. In order to cancel the interference component to obtain the desired signal component, the radio reception apparatus is provided with filters in some cases.

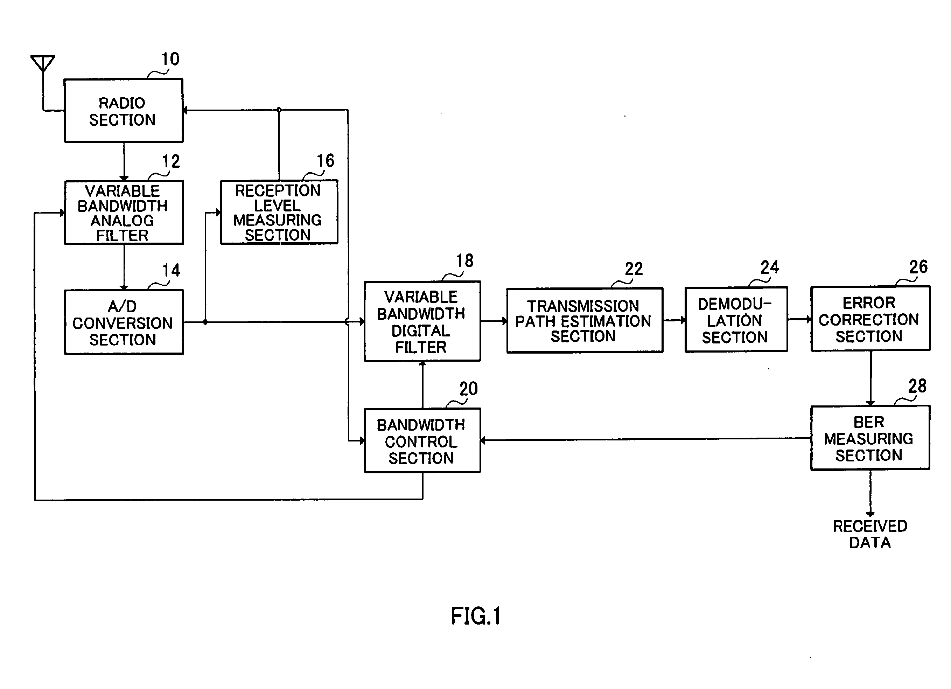

FIG. 1 is a block diagram illustrating one configuration example of a radio reception apparatus provided with filters.

The radio reception apparatus illustrated in this figure includes; : a radio section 10; a variable bandwidth analog filter 12; an A/D conversion section 14; a reception level measuring section 16; a variable bandwidth digital filter 18; a bandwidth control section 20; a transmission path estimation section 22; a demodulation section 24; an error correction section 26; and a BER (Bit Error Rate) measuring section 28.

A signal received through an antenna is subjected to predetermined radio reception processing (including gain amplification and down-conversion) by the radio section 10. Then, folding noise cancellation and partial cancellation of adjacent channel interference are performed per processing unit (e.g., time slot) by the variable bandwidth analog filter 12. Here, the bandwidth of the variable bandwidth analog filter 12 is controlled optimally by the bandwidth control section 20. Moreover, as for the filter characteristic of the variable bandwidth analog filter 12, the filter should be able to cancel the noise having frequency of half or greater of the sampling frequency upon A/D conversion by the A/D conversion section 14. After the filtering, the received signal is A/D converted by the A/D conversion section 14, and the RSSI (Received Signal Strength Indication) is measured by the reception level measuring section 16.

Then, according to this RSSI measurement result, the gain of the radio section 10 is controlled and AGC (Auto Gain Control) control is performed.

Moreover, adjacent channel interference that cannot be completely cancelled by the variable bandwidth analog filter 12 is cancelled from the A/D converted signal on a per time slot basis (i.e. the processing unit) by the variable bandwidth digital filter 18. The bandwidth of the variable bandwidth digital filter 18 is controlled optimally by the bandwidth control section 20, similar to the variable bandwidth analog filter 12.

After the filtering, transmission path estimation section 22 estimates transmission path characteristic from the received signal. The received signal is demodulated by the demodulation section 24 and error-corrected by the error correction section 26, and the BER is measured by the BER measuring section 28, and the received data is thus obtained.

The RSSI measured by the reception level measuring section 16 and the BER measured by the BERmeasuring section 28 are input to the bandwidth control section 20 to detect the impact of adjacent channel interference. Then, based on this detection result, the bandwidth of the variable bandwidth analog filter 12 and that of the variable bandwidth digital filter 18 to apply to the next time slot (i.e. the processing unit) are controlled optimally. This improves the effect of interference cancellation of the filtering.

A radio reception apparatus that thus cancels adjacent channel interference by adaptively controlling filter characteristics such as the bandwidth of a filter is disclosed in, for example, Japanese Patent Publication No. 2663716.

However, in the aforementioned radio reception apparatus, the optimal bandwidth of the filters is determined using the RSSI and BER relating to such the processing unit as previously received time slot to cancel interference from the current processing unit. For this reason, there is a problem that the filter characteristic may not be always optimal for the current processing unit subject to interference cancellation.

Particularly, when diversity technology such as frequency hopping is adopted in a radio communication system in order to reduce the impact of frequency selective fading, the degree of impact of adjacent channel interference and the signal to noise ratio (i.e. the S/N ratio) may change largely on a per time slot basis. As a result, the filter characteristic cannot be controlled optimally for the current time slot by using information on the previous time slot.

Moreover, when the transmitting side employs the kind of adaptive modulation scheme that selects modulation schemes according to variations in instantaneous propagation path characteristics, the modulation schemes may sometimes change on a per time slot basis. As a result, as mentioned above, the filter characteristic cannot be controlled optimally for the current time slot using information on the previous time slot.

Furthermore, when the adaptive modulation scheme is adopted, the characteristic of a baseband filter at the transmitting side varies between modulation schemes (e.g., GMSK (Gaussian filtered Minimum Shift Keying) modulation and 8PSK modulation in EDGE (Enhanced Data rate for GSM and TDMA-136 Evolution)) in some cases. As a result, the receiving side cannot sufficiently ensure reception performance by only adjusting the filter characteristic for the purpose of canceling adjacent channel interference.

### SUMMARY OF THE INVENTION

An object of the present invention is to provide a radio reception apparatus and a reception filtering method that can effectively cancel interference component from received signals and improve reception performance.

The gist of the present invention is to adjust filter characteristics on a per processing unit basis in received signal (e.g., time slot) based on information that is obtained from this processing unit and cancel adjacent channel interference and inter-symbol interference.

According to one aspect of the invention, a radio reception apparatus is provided, and this apparatus has: a reception section that receives a signal on a per processing unit basis, the processing unit including a known signal pattern; an adjusting section that adjusts a filter for filtering the received signal using the known signal pattern in the processing unit; and a canceling section that cancels an interference component in the processing unit using the adjusted filter.

According to another aspect of the invention, a reception filtering method is provided, and this method has the steps of: receiving a signal on a per processing unit basis, the processing unit including a known signal pattern; adjusting a filter for filtering the received signal using the known signal pattern in the processing unit; and canceling an interference component in the processing unit using the adjusted filter.

### BRIEF DESCRIPTION OF THE DRAWINGS

The above and other objects and features of the invention will appear more fully hereinafter from a consideration of the following description taken in connection with the accompanying drawings, wherein examples are illustrated by way of example, in which:
FIG. 1 is a block diagram illustrating a configuration example of a radio reception apparatus;
FIG. 2 is a block diagram illustrating a configuration of a radio reception apparatus according to Embodiment 1 of the present invention;
FIG. 3 is a block diagram illustrating a configuration of a radio reception apparatus according to Embodiment 2 of the present invention;
FIG. 4 is a block diagram illustrating a configuration of a radio reception apparatus according to Embodiment 3 of the present invention;
FIG. 5 is a block diagram illustrating a configuration of a radio reception apparatus according to Embodiment 4 of the present invention; and
FIG. 6 is a block diagram illustrating a configuration of an adaptive digital filter section according to Embodiment 4 of the present invention.

### DETAILED DESCRIPTION OF THE PREFERRED EMBODIMENTS

The following will explain the embodiments of the present invention with reference to the drawings.

In the following explanation, an example will be described with a radio reception apparatus used in a radio communication system adopting a TDMA (Time Division Multiple Access) scheme. Accordingly, time slots will be explained as an example of processing unit. Moreover, it is assumed that a known signal pattern (i.e. training signal) for use for synchronization acquisition and transmission path estimation is inserted in each time slot.

However, the present invention is not limited to the aforementioned system and signal configuration as long as a predetermined known signal pattern is inserted in each processing unit that constitutes a received signal.

### (Embodiment 1)

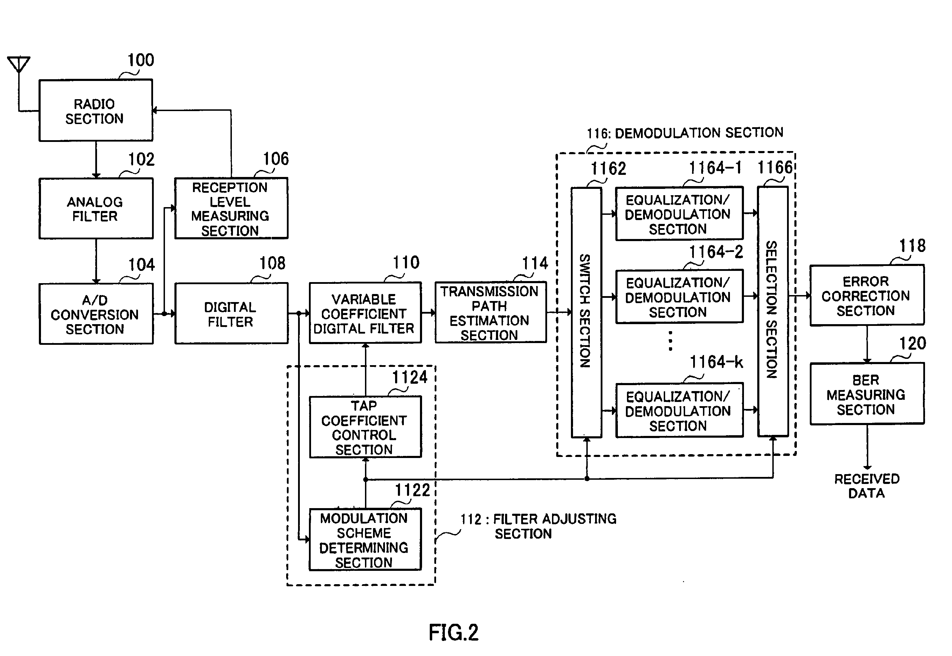

FIG. 2 is a block diagram illustrating a configuration of a radio reception apparatus according to Embodiment 1 of the present invention.

The radio reception apparatus illustrated in FIG. 2 includes: a radio section 100; an analog filter 102; anA/D conversion section 104; a reception level measuring section 106; a digital filter 108; a variable coefficient digital filter 110; a filter adjusting section 112 having a modulation scheme determining section 1122 and a tap coefficient control section 1124; a transmission path estimation section 114; a demodulation section 116 having a switch section 1162, equalization/demodulation sections 1164-1 to 1164-k (k is an integer) and a selection section 1166; an error correction section 118; and a BER (Bit Error Rate) measuring section 120.

The radio section 100 receives a signal through an antenna and performs predetermined radio reception processing (including gain amplification and down-conversion) upon the received signal.

The analog filter 102 performs folding noise cancellation and partial cancellation of adjacent channel interference on a per time slot basis. As for the filter characteristic of the analog filter 102, the filter should be able to cancel the noise having frequency of half or greater of the sampling frequency upon A/D conversion.

The A/D conversion section 104 A/D converts the filtered received signal and outputs a digital signal.

The reception level measuring section 106 measures the RSSI (Received Signal Strength Indication) using the digital signal output from the A/D conversion section 104, and controls the gain of the radio section 100 based on the measured RSSI. The above radio section 100, analog filter 102, A/D conversion section 104, and reception level measuring section 106 form the AGC (Auto Gain Control) loop.

The digital filter 108 cancels adjacent channel interference that cannot be completely cancelled by the analog filter 102 from the digital signal output from the A/D conversion section 104. In addition, when the adjacent channel interference can be sufficiently cancelled by the analog filter 102, the configuration without digital filter 108 is equally possible.

The variable coefficient digital filter 110 changes the tap coefficients to optimize the filter characteristic, and cancels inter-symbol interference. Additionally, the variable coefficient digital filter 110 uses the tap coefficients determined by a tap coefficient control section 1124 (described later). Moreover, the optimal filter characteristic of the variable coefficient digital filter 110 is one whereby the combined characteristic with a baseband filter at the transmitting side have Nyquist characteristic. The filter adjusting section 112 determines the tap coefficients of the variable coefficient digital filter 110 according to the modulation scheme used for the received signal.

More specifically, the modulation scheme determining section 1122 performs processing such as comparison between the likelihoods calculated for individual modulation schemes to estimate the modulation scheme using the known signal patterns included in the received signal, and outputs a modulation scheme selection signal that represents the estimated modulation scheme. Then, the tap coefficient control section 1124 determines optimal tap coefficients for the estimated modulation scheme according to the modulation scheme selection signal output from the modulation scheme determining section 1122. The optimal tap coefficients here refer to such tap coefficients of the variable coefficient digital filter 110 whereby the combining characteristic with a baseband filter at the transmitting side have Nyquist characteristic.

The transmission path estimation section 114 estimates transmission path characteristic using the known signal patterns included in the received signal.

The demodulation section 116 demodulates the received signal using the modulation scheme selection signal output from the modulation scheme determining section 1122 and the transmission path characteristic output from the transmission path estimation section 114.

More specifically, the switch section 1162 outputs the received signal to the equalization/demodulation sections 1164-1 to 1164-k corresponding to the modulation scheme. The equalization/demodulation sections 1164-1 to 1164-k are provided to correspond to the modulation schemes, and equalize and demodulate the received signal. The selection section 1166 selects an equalization/demodulation section that outputs demodulation result from among the equalization/demodulation sections 1164-1 to 1164-k, and outputs the demodulation result as the demodulated data.

The error correction section 118 error-corrects the demodulated data output from the demodulation section 116.

The BER measuring section 120 measures the BER of the error-corrected demodulated signal, and finds the reception quality and outputs the received data.

An explanation will be next given of operations of the above-configured radio reception apparatus. In addition, the following operations are all carried out on a per time slot basis.

The received signal received through an antenna is subjected to predetermined radio reception processing (including gain amplification and down-conversion) by the radio section 100. Then, folding noise cancellation and partial cancellation of adj acent channel interference are performed on a per time slot (i.e., the processing unit) by the analog filter 102. This folding noise cancellation cancels the noise having frequency of half or greater of the sampling frequency upon A/D conversion.

The signal filtered by the analog filter 102 is A/D converted by the A/D conversion section 104. The digital signal obtained then is output to the reception level measuring section 106 and the digital filter 108.

When the digital signal is input to the reception level measuring section 106, the RSSI is measured. Then, based on the RSSI measured, the gain of the radio section 100 is controlled, and automatic gain control is performed by the AGC loop including the aforementioned radio section 100, analog filter 102, A/D conversion section 104, and reception level measuring section 106.

On the other hand, when the digital signal is input to the digital filter 108, adjacent channel interference that cannot be completely cancelled by the analog filter 102 is cancelled from the digital signal. The adjacent channel interference is thus cancelled from the received signal.

The signal filtered by the digital filter 108 is output to the variable coefficient digital filter 110 and the modulation scheme determining section 1122 of the filter adjusting section 112. Then, the modulation scheme determining section 1122 estimates the modulation scheme used in the transmitting side from the known signal pattern inserted in the time slot that is being processed. More specifically, for example, the likelihoods calculated for individual modulation schemes are compared to estimate the modulation scheme used in the transmitting side.

Then, a modulation scheme selection signal that represents the estimated modulation scheme is output to the tap coefficient control section 1124, the switch section 1162 and the selection section 1166 of the demodulation section 116. When the modulation scheme selection signal is input to the tap coefficient control section 1124, optimal tap coefficients for the modulation scheme represented by the modulation scheme selection signal are determined.

The optimal tap coefficients determined here are set in the variable coefficient digital filter 110 and refer to such tap coefficients that the combined characteristic with a baseband filter in the transmitting side will have Nyquist characteristic.

The determined tap coefficients are output to the variable coefficient digital filter 110 and set. Then, inter-symbol inference is cancelled from the received signal by the variable coefficient digital filter 110. At this time, even when the kind of adaptive modulation scheme that changes the modulation scheme on a per time slot basis is adopted in the transmitting side, provided that the tap coefficients of the variable coefficient digital filter 110 are made optimal as described above, inter-symbol interference can be effectively cancelled.

Transmission path characteristic is estimated by the transmission path estimation section 114 and the signal obtained by canceling inter-symbol interference is output to the switch section 1162 of the modulation section 116 with the estimation result. Since the modulation scheme selection signal is input to the switch section 1162, the modulation scheme of the received signal is known and the received signal from which interference is canceled and the transmission path characteristic estimation result are output to the equalization/modulation section corresponding to the modulation scheme among the equalization/demodulation sections 1164-1 to 1164-k.

Then, the estimated transmission path characteristic is used to equalize and demodulate the received signal. Moreover, since the modulation scheme selection signal is input to the selection section 1166, the modulation scheme of the received signal is known and the demodulation result of the equalization/demodulation section corresponding to the modulation scheme is selected and the selected result is output as the demodulated signal to the error correction section 118.

The demodulated signal is error-corrected by the error correction section 118 and the BER is measured by the BER measuring section 120, and the received data is thus obtained.

In this way, according to this embodiment, the modulation scheme in the processing unit is estimated using the known signal pattern inserted in this processing unit in the received signal, tap coefficients optimal for the estimated modulation scheme are determined, and the determined tap coefficients are set in a variable coefficient digital filter, to cancel inter-symbol interference. This makes it possible to effectively cancel the interference component from the received signal and improve reception performance.

### (Embodiment 2)

A feature of Embodiment 2 of the present invention lies in detecting levels of adjacent channel interference and controlling the tap coefficients of a filter for adjacent channel interference cancellation while also using detected adjacent channel interference levels and adjusting the tap coefficients of a filter for inter-symbol interference cancellation.

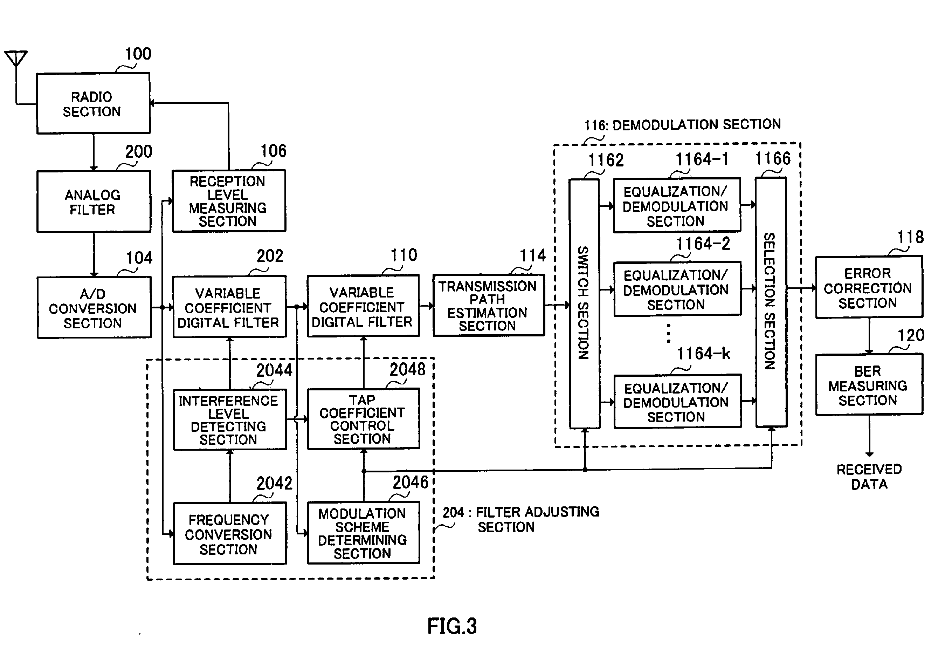

FIG. 3 is a block diagram illustrating the configuration of a radio reception apparatus according to Embodiment 2 of the present invention. The same reference numerals as those of the radio reception apparatus of FIG. 2 are added to the corresponding parts of this figure, and the specific explanation is omitted.

The radio reception apparatus illustrated in FIG. 3 includes: a radio section 100; an analog filter 200; an A/D conversion section 104; a reception level measuring section 106; a variable coefficient digital filter 202; a variable coefficient digital filter 110; a filter adjusting section 204 having a frequency conversion section 2042, an interference level detecting section 2044, a modulation scheme determining section 2046, and a tap coefficient control section 2048; a transmission path estimation section 114; a demodulation section 116 having a switch section 1162, equalization/demodulation sections 1164-1 to 1164-k (k is an integer) and a selection section 1166; an error correction section 118; and a BER (Bit Error Rate) measuring section 120.

The analog filter 200 performs folding noise cancellation on a per time slot basis. In addition, the analog filter 200 does not cancel adjacent channel interference, unlike the analog filter 102 of Embodiment 1.

The variable coefficient digital filter 202 changes the tap coefficients and cancels adjacent channel interference from the digital signal output from the A/D conversion section 104. In addition, the variable coefficient digital filter 202 uses tap coefficients determined by the interference level detecting section 2044 (described later).

The filter adjusting section 204 determines the tap coefficients of the variable coefficient digital filter 202 and the variable coefficient digital filter 110, respectively, according to the frequency of the received signal and the modulation scheme used for the received signal.

More specifically, the frequency conversion section 2042 executes, for example, FFT (Fast Fourier Transform) to perform a frequency analysis of the received signal. The interference level detecting section 2044 compares the signal levels corresponding to individual frequencies obtained from the result of the frequency analysis to a predetermined threshold value (which may be updated on a per time slot basis) to detect the locations and levels of adjacent channel interference. Moreover, the interference level detecting section 2044 determines the tap coefficients of the variable coefficient digital filter 202 according to the detected locations and levels of adjacent channel interference. Additionally, when there is no adjacent channel interference as a result of comparison with the predetermined threshold value, the interference level detecting section 2044 determines the tap coefficients of the variable coefficient digital filter 202 so as not to lose information of the primary signal included in the adjacent channel bandwidth of the primary signal.

Moreover, themodulation scheme determining section 2046 performs processing such as comparison between the likelihoods calculated for individual modulation schemes to estimate the modulation scheme using the known signal patterns included in the received signal, and outputs a modulation scheme selection signal that represents the estimated modulation scheme. Then, the tap coefficient control section 2048 determines the tap coefficients of variable coefficient digital filter 110 that are optimal for the estimated modulation scheme according to the modulation scheme selection signal output from the modulation scheme determining section 2046. Furthermore, the tap coefficient control section 2048 adjusts the tap coefficients of the variable coefficient digital filter 110 using information relating to the tap coefficients of the variable coefficient digital filter 202 determined by the interference level detecting section 2044.

An explanation will be next given of operations of the above-configured radio reception apparatus. In addition, the following operations are all carried out on a per time slot basis.

A signal received through an antenna is subjected to predetermined radio reception processing (including gain amplification and down-conversion) by the radio section 100. Then, folding noise cancellation is performed on a per time slot basis (i.e., the processing unit) by the analogue filter 200. This folding noise cancellation cancels the noise having frequency of half or greater of the sampling frequency upon A/D conversion.

The signal filtered by the analog filter 200 is A/D converted by the A/D conversion section 104. The digital signal obtained then is output to the reception level measuring section 106, the variable coefficient digital filter 202, and the frequency conversion section 2042 of the filter adjusting section 204.

When the digital signal is input to the reception level measuring section 106, the RSSI is measured. Then, based on the RSSI measured, the gain of the radio section 100 is controlled and automatic gain control is performed by the AGC loop including the aforementioned radio section 100, analog filter 200, A/D conversion section 104, and reception level measuring section 106.

On the other hand, when the digital signal is input to the frequency conversion section 2042, for example, FFT is executed to perform a frequency analysis. The result of this frequency analysis is output to the interference level detecting section 2044 to compare the signal levels for individual frequencies to a predetermined threshold value. As a result, the locations and levels of adjacent channel interference are detected.

The predetermined threshold value to be compared with the signal levels for individual frequencies may be updated on a per time slot basis.

Then, the interference level detecting section 2044 determines the tap coefficients of the variable coefficient digital filter 202 in accordance with the detected locations and levels of adjacent channel interference. Additionally, when no adjacent channel interference is detected, the interference level detecting section 2044 determines the tap coefficients so as not to lose information of the primary signal included in the adjacent channel bandwidth of the primary signal. In this embodiment, since the analog filter 200 does not cancel the adjacent channel interference, the interference level detecting section 2044 can correctly detect the adjacent channel interference in all bandwidths.

The determined tap coefficients are output to the variable coefficient digital filter 202 and set, and the determined tap coefficients are output to the tap coefficient control section 2048. Then, adjacent channel interference is cancelled from the received signal by the variable coefficient digital filter 202.

The signal filtered by the variable coefficient digital filter 202 is output to the variable coefficient digital filter 110 and the modulation scheme determining section 2046 of the filter adjusting section 204. Then, the modulation scheme determining section 2046 estimates the modulation scheme used in the transmitting side from the known signal pattern inserted in the time slot that is being processed. More specifically, for example, the likelihoods calculated for individual modulation schemes are compared to estimate the modulation scheme used in the transmitting side.

Then, a modulation scheme selection signal that represents the estimated modulation scheme is output to the tap coefficient control section 2048, the switch section 1162 and the selection section 1166 of the demodulation section 116. When the modulation scheme selection signal is input to the tap coefficient control section 2048, optimal tap coefficients are determined that correspond to the modulation scheme represented by the modulation scheme selection signal and the tap coefficients of the variable coefficient digital filter 202 determined by the interference level detecting section 2044.

The optimal tap coefficients determined here are set in the variable coefficient digital filter 110 and are such tap coefficients that combined characteristic with a baseband filter at the transmitting side has a Nyquist characteristic and that take into consideration the information about the tap coefficients set in the variable coefficient digital filter 202.

More specifically, information on the locations and levels of adjacent channel interference and filtering in the variable coefficient digital filter 202 are taken into consideration in adjustment of tap coefficients. Namely, for example, when adjacent channel interference exists, the combined characteristic with the variable coefficient digital filter 202 is adjusted optimally in order to prevent the variable coefficient digital filter 110 from amplifying the bandwidth of adjacent channel interference.

The adjusted tap coefficients are output to the variable coefficient digital filter 110 and set. Then, the variable coefficient digital filter 110 cancels inter-symbol interference from the received signal. At this time, even when the kind of adaptive modulation scheme that changes the modulation scheme on a per time slot basis is used in the transmitting side, provided that the tap coefficients of the variable coefficient digital filter 110 are optimally set according to information on the aforementioned modulation scheme and filtering of the adjacent channel interference, inter-symbol interference is effectively cancelled and the adjacent channel as interference component is prevented from being amplified.

Transmission path characteristic is estimated by the transmission path estimation section 114, and the signal obtained by canceling inter-symbol interference therefrom is output to the switch section 1162 of the demodulation section 116 with the estimation result. Since the modulation scheme selection signal is input to the switch section 1162, the modulation scheme of the received signal is known and the received signal from which interference is canceled and the transmission path characteristic estimation result are output to the equalization/modulation section corresponding to the modulation scheme among the equalization/demodulation sections 1164-1 to 1164-k.

Then, the estimated transmission path characteristic is used to equalize and demodulate the received signal. Moreover, since the modulation scheme selection signal is input to the selection section 1166, the modulation scheme of the received signal is known and the demodulation result of the equalization/demodulation section corresponding to the modulation scheme is selected and the selected result is output as the demodulated signal to the error correction section 118.

The demodulated signal is error-corrected by the error correction section 118 and the BER is measured by the BER measuring section 120, and the received data is thus obtained.

In this way, according to this embodiment, adjacent channel interference is detected from the signal levels per frequency of the received signal to set tap coefficients in a variable coefficient digital filter according to detection result to cancel adjacent channel interference. Moreover, the modulation scheme in the processing unit is estimated using the known signal pattern inserted in the processing unit of the received signal, optimal tap coefficients are determined from information on the estimated modulation scheme and adjacent channel interference, and the determined tap coefficients are set in a variable coefficient digital filter to cancel inter-symbol interference. This makes it possible to effectively cancel the interference component from the received signal and improve reception performance.

### (Embodiment 3)

The feature of Embodiment 3 of the present invention lies in controlling the tap coefficients of a filter for canceling adjacent channel interference based on signal errors that occur due to transmission path characteristic.

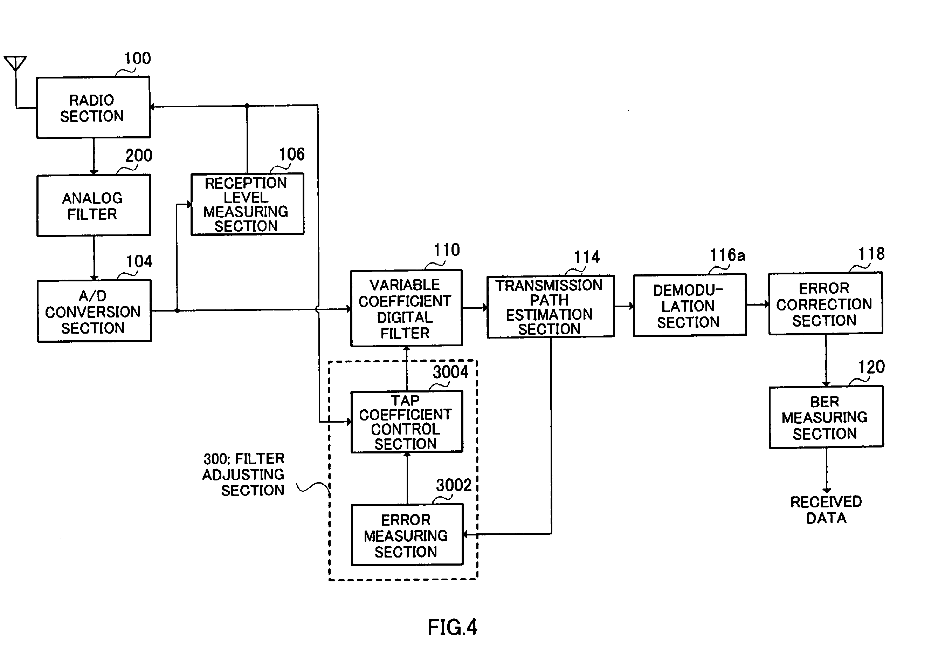

FIG. 4 is a block diagram illustrating the configuration of a radio reception apparatus according to Embodiment 3 of the present invention. The same reference numerals as those of the radio reception apparatus of FIG. 2 or 3 are added to the corresponding parts of this figure, and the specific explanation is omitted.

The radio reception apparatus illustrated in FIG. 4 includes: a radio section 100; an analog filter 200; anA/D conversion section 104; a reception level measuring section 106; a variable coefficient digital filter 110; a filter adjusting section 300 having an error measuring section 3002 and a tap coefficient control section 3004; a transmission path estimation section 114; a demodulation section 116a; an error correction section 118, and a BER measuring section 120.

The filter adjusting section 300 determines the tap coefficients of the variable coefficient digital filter 110 according to the RSSI of a received signal and error in known signal pattern included in the received signal due to transmission path characteristic.

More specifically, the error measuring section 3002 compares the known signal pattern portion included in the received signal with a known signal pattern portion obtained by canceling the transmission path characteristic estimated by the transmission path estimation section 114 to measure the error. Then, when the error of the known signal pattern portion is large (that is, reception quality is poor) in spite of the fact that the reception level shown by the RSSI output from the reception level measuring section 106 is high, the tap coefficient control section 3004 judges that reception quality is deteriorated by adjacent channel interference, and adjusts the tap coefficients of the variable coefficient digital filter 110 accordingly.

The demodulation section 116a demodulates the received signal with reference to the transmission path characteristic output from the transmission path estimation section 114.

An explanation will be next given of operations of the above-configured radio reception apparatus.

In addition, the following operations are all carried out on a per time slot basis.

The received signal through an antenna is subjected to a predetermined radio reception processing (including gain amplification and down-conversion) by the radio section 100. Then, folding noise is canceled on a per time slot basis by the analog filter 200. This folding noise cancellation cancels the noise having frequency of half or greater of the sampling frequency upon A/D conversion.

The signal filtered by the analog filter 200 is A/D converted by the A/D conversion section 104, and the obtained digital signal is output to the reception level measuring section 106 and the variable coefficient digital filter 110.

When the digital signal is input to the reception level measuring section 106, an RSSI is measured. Then, based on the RSSI measured, the gain of the radio section 100 is controlled and automatic gain control is performed by the AGC loop including the aforementioned radio section 100, analog filter 200, A/D conversion section 104, and reception level measuring section 106. Moreover, the measured RSSI is output to the tap coefficient control section 3004 of the filter adjusting section 300.

On the other hand, when the digital signal is input to the variable coefficient digital filter 110, predetermined tap coefficients are initially set to cancel adjacent channel interference and to perform partial wave-shaping (including inter-symbol interference cancellation). After the wave-shaping, the digital signal is held in the variable coefficient digital filter 110 and input to the transmission path estimation section 114, and the known signal pattern portion included in the digital signal is used to estimate transmission path characteristic.

Then, the error measuring section 3002 compares the known signal pattern included in the received signal with the known signal pattern portion obtained by canceling the estimated transmission path characteristic to measure an error due to the transmission path characteristic. Information of the measured error is output to the tap coefficient control section 3004.

Then, the tap coefficient control section 3004 adjusts the tap coefficients of the variable coefficient digital filter 110. Namely, for example, when the error measured by the error measuring section 3002 is large (that is, reception quality is poor) in spite of the fact that the RSSI measured by the reception level measuring section 106 shows that the reception level is high, the tap coefficients are adjusted taking the impact of adjacent channel interference in assumption.

The adjusted tap coefficients are output to the variable coefficient digital filter 110 and set. Then, the digital signal held in the variable coefficient digital filter 110 is filtered using the newly set tap coefficients.

This makes it possible to effectively cancel the adjacent channel interference.

Transmission path characteristic is estimated by the transmission path estimation section 114, and the signal obtained by canceling the adjacent channel interference therefrom is output to the demodulation section 116a together with the estimation result.

Then, the estimated transmission path characteristic is used to equalize and demodulate the received signal. The demodulated signal is error-corrected by the error correction section 118 and the BER is measured by the BER measuring section 120, and the received data is thus obtained.

Thus, according to this embodiment, the presence or absence of adjacent channel interference is determined using the error measured by use of the reception level of the received signal and the known signal pattern included in the received signal, and the tap coefficients of the variable coefficient digital filter are adjusted based on this result to perform filtering. This makes it possible to effectively cancel the interference component from the received signal and improve reception performance.

### (Embodiment 4)

The feature of Embodiment 4 of the present invention lies in selecting a plurality of filters having different filter characteristics according to modulation schemes to cancel inter-symbol interference.

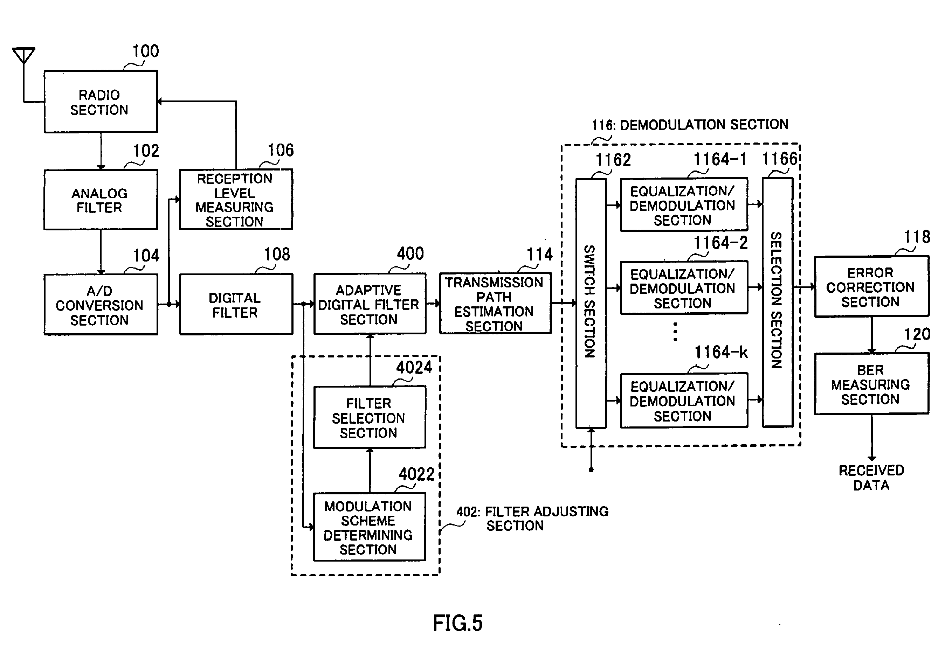

FIG. 5 is a block diagram illustrating a configuration of a radio reception apparatus according to Embodiment 4 of the present invention. The same reference numerals as those of the radio reception apparatus of FIG. 2 are added to the corresponding parts of this figure, and the specific explanation is omitted.

The radio reception apparatus illustrated in FIG. 5 includes: a radio section 100; an analog filter 102; anA/D conversion section 104; a reception level measuring section 106; a digital filter 108; an adaptive digital filter section 400; a filter adjusting section 402 having a modulation scheme determining section 4022 and a filter selection section 4024; a transmission path estimation section 114; a demodulation section 116 having a switch section 1162; equalization/demodulation sections 1164-1 to 1164-k (k is an integer) and a selection section 1166; an error correction section 118; and a BER measuring section 120.

The adaptive digital filter 400 performs switching among a plurality of filters having different filter characteristics to cancel inter-symbol interference according to instructions from the filter adjusting section 402.

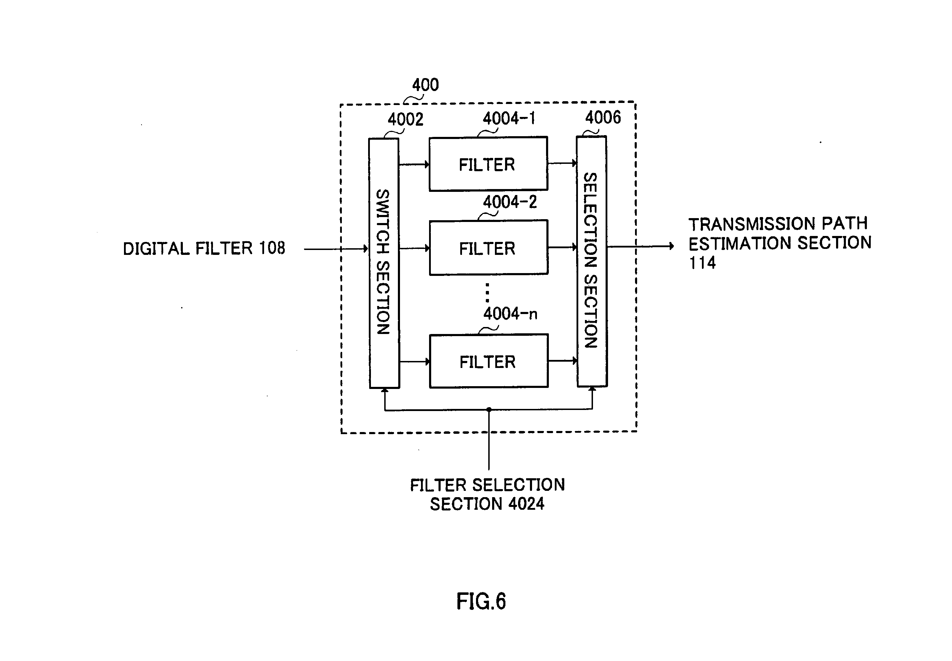

FIG. 6 is a block diagram illustrating the configuration of the adaptive digital filter section 400.

A switch section 4002 outputs a received signal to one of filters 4004-1 to 4004-n (n is an integer) according to instructions from the filter selection section 4024.

The filters 4004-1 to 4004-n are digital filters having different filter characteristics and cancel inter-symbol interference from the input signal.

A selection section 4006 outputs a signal filtered by one of the filters 4004-1 to 4004-n that cancel inter-symbol interference to the transmission path estimation section 114 according to instructions from the filter selection section 4024.

The filter adjusting section 402 selects a filter for canceling inter-symbol interference from among the filters 4004-1 to 4004-n provided in the adaptive digital filter section 400 according to the modulation scheme used in the received signal.

More specifically, the modulation scheme determining section 4022 performs processing such as comparison between the likelihoods calculated for individual modulation schemes to estimate the modulation scheme using known signal patterns included in the received signal, and outputs a modulation scheme selection signal that represents the estimatedmodulation scheme. Then, the filter selection section 4024 selects a filter having optimal filter characteristic for the estimated modulation scheme from among the filters 4004-1 to 4004-n according to the modulation scheme selection signal output from the modulation scheme determining section 4022, and reports the selected filter to the switch section 4002 and the selection section 4006. An explanation will be next given of operations of the above-configured radio reception apparatus.

In addition, the following operations are all carried out for each time slot.

A signal received through an antenna is subjected to a predetermined radio reception processing (including gain amplification and down-conversion) by the radio section 100. Then, folding noise cancellation and partial cancellation of adjacent channel interference are performed on a per time slot basis (i.e., the processing unit) by the variable bandwidth analog filter 102. This folding noise cancellation cancels the noise having frequency of half or greater of the sampling frequency upon A/D conversion.

The signal filtered by the analog filter 102 is A/D converted by the A/D conversion section 104. The digital signal obtained then is output to the reception level measuring section 106 and the digital filter 108.

When the digital signal is input to the reception level measuring section 106, the RSSI is measured. Then, based on the RSSI measured, the gain of the radio section 100 is controlled and automatic gain control is performed by the AGC loop including the aforementioned radio section 100, analog filter 102, A/D conversion section 104, and reception level measuring section 106.

On the other hand, when the digital signal is input to the digital filter 108, adjacent channel interference that cannot be completely cancelled by the analog filter 102 is cancelled from the digital signal. The adjacent channel interference is thereby cancelled from the received signal.

The signal filtered by the digital filter 108 is output to the adaptive digital filter section 400 and the modulation scheme determining section 4022 of the filter adjusting section 402. Then, the modulation scheme determining section 4022 estimates the modulation scheme used in the transmitting side from the known signal pattern inserted in the time slot that is being processed. More specifically, for example, the likelihoods calculated for individual modulation schemes are compared to estimate the modulation scheme used in the transmitting side.

Then, a modulation scheme selection signal that represents the estimated modulation scheme is output to the filter selection section 4024, and the switch section 1162 and the selection section 1166 of the demodulation section 116. When the modulation scheme selection signal is input to the filter selection section 4024, an optimal filter is selected from among the filters 4004-1 to 4004-n of the adaptive digital filter section 400 according to the modulation scheme represented by the modulation scheme selection signal.

Information on the selected filter is reported to the switch section 4002 and the selection section 4006 of the adaptive digital filter section 400, and the switch section 4002 and the selection section 4006 each input /output signals to/from the selected filter. Then, inter-symbol interference is cancelled from the received signal by one of the filters 4004-1 to 4004-n. At this time, even when the kind of adaptive modulation scheme that changes the modulation scheme on a per time slot basis is employed in the transmitting side, the filter that cancels inter-symbol interference can be adaptively changed according to the modulation scheme. As a result, the inter-symbol interference can be effectively cancelled.

Transmission path characteristic is estimated by the transmission path estimation section 114 and the signal obtained by canceling inter-symbol interference therefrom is output to the switch section 1162 of the modulation section 116 together with the estimation result. Since the modulation scheme selection signal is input to the switch section 1162, the modulation scheme of the received signal is known and the received signal from which interference is canceled and the transmission path characteristic estimation result are output to the equalization/modulation section that corresponds to the modulation scheme among the equalization/demodulation sections 1164-1 to 1164-k.

Then, the estimated transmission path characteristic is used to equalize and demodulate the received signal. Moreover, since the modulation scheme selection signal is input to the selection section 1166, the modulation scheme of the received signal is known and the demodulation result of the equalization/demodulation section corresponding to the modulation scheme is selected and the selected result is output as a demodulated signal to the error correction section 118.

The demodulated signal is error-corrected by the error correction section 118 and the BER is measured by the BER measuring section 120, and the received data is thus obtained.

In this way, according to this embodiment, the modulation scheme of the processing unit is estimated using the known signal pattern inserted in this processing unit of the received signal, and the filter that has filter characteristic that corresponds to the estimated modulation scheme is selected to cancel inter-symbol interference. This makes it possible to effectively cancel the interference component from the received signal and improve reception performance.

In addition, aforementioned Embodiment 1 or 2 may be combined with Embodiment 3 for implementation. That is, it is by all means possible to determine tap coefficients according to the modulation scheme of the received signal, and also measure the error of the received signal using the result of the transmission path estimation, and adjust the tap coefficients based on the measured error and the reception level.

As explained above, according to the present invention, the interference component can be effectively cancelled from the received signal and reception performance can be improved.

The present invention is not limited to the above described embodiments, and various variations and modifications may be possible without departing form the scope of the present invention.

This application is based on Japanese Patent Application No. 2003-132145 filed on May 9, 2003, entire content of which is expressly incorporated by reference herein.

## Claims

1. A radio reception apparatus comprising:
a reception section (100) that receives a signal on a per processing unit basis, said processing unit including a known signal pattern;
an adjusting section (112, 204, 300, 402) that adjusts a filter for filtering the received signal using the known signal pattern in the processing unit; and
a canceling section (110, 202, 400) that cancels an interference component in the processing unit using the adjusted filter.

2. The radio reception apparatus according to claim 1, wherein the adjusting section (112, 204) includes:
a modulation scheme determining section (1122, 2046) that determines a modulation scheme on a per said processing unit basis using the known signal pattern; and
a tap coefficient control section (1124, 2048) that controls tap coefficients to set to the filter according to the determined modulation scheme.

3. The radio reception apparatus according to claim 1, wherein the adjusting section (204) includes:
a frequency conversion section (2042) that performs a frequency analysis of the received signal; and
an interference level detecting section (2044) that detects adjacent channel interference from a result of the frequency analysis and determines tap coefficients to set to the filter according to the detection result.

4. The radio reception apparatus according to claim 1, wherein the adjusting section (300) includes:
an error measuring section (3002) that measures an error of the received signal that occurs due to a transmission path characteristic on a per said processing unit basis using the known signal pattern; and
a tap coefficient control section (3004) that controls tap coefficients to set to the filter based on the measured error and a reception level of the received signal.

5. The radio reception apparatus according to claim 1, wherein the canceling section (400) includes a plurality of filters (4004-1 to 4004-n) having different filter characteristics; and
wherein the adjusting section (402) includes:
a modulation scheme determining section (4022) that determines the modulation scheme on a per said processing unit basis using the known signal pattern; and
a filter selection section (4024) that selects one of the plurality of filters (4004-1 to 4004-n) according to the determined modulation scheme.

6. The radio reception apparatus according to claim 1, wherein the canceling section (110, 202, 400) cancels adjacent channel interference or inter-symbol interference.

7. The radio reception apparatus according to claim 1, wherein the adjusting section (112, 204, 300, 402) adjusts a filter characteristic of the filter in such a way that a combined characteristic of said filter with a baseband filter at a communicating partner station has a Nyquist characteristic.

8. A communication terminal apparatus having the radio reception apparatus recited in claim 1.

9. A base station apparatus having the radio reception apparatus recited in claim 1.

10. A reception filtering method comprising the steps of:
receiving a signal on a per processing unit basis, said processing unit including a known signal pattern;
adjusting a filter for filtering the received signal using the known signal pattern in the processing unit; and
canceling an interference component in the processing unit using the adjusted filter.
